# EUROPÄISCHE PATENTSCHRIFT

(11) **EP 0 652 116 B1**
(45) Veröffentlichungstag und Bekanntmachung des Hinweises auf die Patenterteilung: **11.12.1996**
(21) Anmeldenummer: 94890182.2
(22) Anmeldetag: 27.10.1994
(51) Int. Cl.: B60C 9/18

(54) **Fahrzeugreifen**
Vehicle tyre
Bandage pneumatique pour véhicule

(30) Priorität: 08.11.1993 AT 2263/93
(43) Veröffentlichungstag der Anmeldung: 10.05.1995
(73) Patentinhaber: Semperit Reifen Aktiengesellschaft, A-2514 Traiskirchen (AT)
(72) Erfinder: Beckmann, Otto, Dr., A-2514 Traiskirchen (AT)
(74) Vertreter: Vinazzer, Edith, Dipl.-Ing.

(56) Entgegenhaltungen:
- EP-A- 0 372 677
- FR-A- 2 083 683
- FR-A- 2 104 013
- LU-A- 66 168
- US-A- 3 918 506
- PATENT ABSTRACTS OF JAPAN vol. 17, no. 68 (M-1365) 10. Februar 1993 & JP-A-04 274 903 (TOYO TIRE&RUBBER CO. LTD.) 30. September 1992

## Beschreibung

Die vorliegende Erfindung betrifft einen Fahrzeugreifen mit einer ein- oder mehrlagigen Radialkarkasse, einem Laufstreifen und einem zwischen der Radialkarkasse und dem Laufstreifen angeordneten Gürtel mit insbesondere mindestens 2 Gürtellagen mit in jeder Lage parallel zueinander verlaufenden Festigkeitsträgern aus Stahl oder aus einem textilen Material und mit zumindest einer zwischen dem Laufstreifen und dem Gürtel angeordneten Gummilage, die mit Fasern verstärkt ist, deren Hauptorientierungsrichtung mit der Umfangsrichtung übereinstimmt.

Zur Verbesserung der Schnellauffestigkeit und der Dauerhaltbarkeit von Gürtelkonstruktionen ist es bei Radialgürtelreifen Stand der Technik, bei der Konfektion der Reifen das Gürtelpaket, welches üblicherweise aus 2 bis 3 Lagen von gummierten Korden, insbesondere Stahlkorden, besteht, mit einem gummierten Nylongewebe, der Nylonbandage abzudecken. Diese Nylonbandage besteht üblicherweise aus in Umfangsrichtung des Reifens umlaufenden, in sogenannter Nullgradlage orientierten parallelen Nylonkorden. Bei der Vulkanisation des Reifens schrumpft das Nylon (Heiß-Schrumpf) und baut um den Gürtel Spannungen auf, die insbesondere die Gürtelkanten niederhalten und solcherart Kantenlockerungen des Gürtels hintanhalten. Neben der Verbesserung der Schnellauffestigkeit wirkt die Nylonbandage auch dem Eindringen von Steinen entgegen und verbessert somit die Dauerhaltbarkeit des Gürtels im praktischen Einsatz. Die Nylonbandage verläuft dabei entweder über die Gesamtbreite des Gürtels unter Abdeckung der seitlichen Gürtelkanten oder besteht aus zumindest zwei Streifen, die jeweils die Gürtelkanten abdecken.

Aus einer Anzahl von Patentdokumenten ist es ferner bekannt, im Gürtelbereich eines Reifens Gummilagen vorzusehen, die Kurzfasern bzw. Stapelfasern enthalten. So wird beispielsweise in der EP-A 0372677 vorgeschlagen, anstelle herkömmlicher Gürtellagen Gummilagen zu verwenden, in denen kurze Fasern enthalten sind, die in einer Vielzahl paralleler Reihen angeordnet sind und Stücke von Einzelfilamenten sind, wobei das Filamentmaterial Nylon, Rayon, Polyester, Baumwolle, Metall, Aramid oder Glas sein kann. Das bevorzugte Material sind Baumwollfasern mit einem Durchmesser von ungefähr 0,076 mm und einer Länge bis zu 1,27 cm. In den einzelnen Gürtellagen können nun diese Fasern entweder sämtlich in Umfangsrichtung oder sämtlich quer zur Umfangsrichtung orientiert werden.

In der CA-A 889677 sind Gürtellagen vorgeschlagen, die als Festigkeitsträger kurze Kordteile beinhalten, die parallel zueinander ausgerichtet sind und in Reihen angeordnet sind, so daß innerhalb einer Reihe die benachbarten Enden dieser Kordteile miteinander fluchten. Diese Kordteile können in eine Gummimatrix eingebettet sein, in der in einer bestimmten Richtung orientierte Filamente oder Fasern enthalten sind. Sowohl die Kordteile als auch die Fasern können aus Rayon, Nylon, Polyester, Baumwolle, Glas oder Metall bestehen.

In der AT-B 315656 wird ein Verstärkungselement für Luftreifen vorgeschlagen, das als Verstärkungsmaterial mineralische Fasern, insbesondere Glasfasern, enthält, deren Länge höchstens 1 mm beträgt. Auch aus der AT-B 322390 ist es bekannt, eine Verstärkungseinlage für den Gürtelverband eines Fahrzeugreifens vorzusehen, die richtungsorientierte Glasfasern enthält. Schließlich ist in der US-A 3918506 geoffenbart, im Gürtelverband, beispielsweise zwischen herkömmlich gestalteten Gürtellagen, eine zusätzliche Lage, die mit Kurzfasern aus Glas versehen ist, anzuordnen.

Die bisher bekannten Lösungen konnten sich in der Praxis nicht durchsetzen, da sie allem Anschein nach den Erwartungen hinsichtlich Verbesserung der Haltbarkeit von Gürtelkonstruktionen nicht entsprechen konnten.

Hier setzt nun die Erfindung ein, deren Aufgabe darin besteht, einen in der Praxis vorteilhaften Einsatz von Stapelfasern im Unterbau des Reifens vorzuschlagen. Gelöst wird die gestellte Aufgabe erfindungsgemäß dadurch, daß die Gummilage bzw. die Gummilagen aus einer Kautschukmischung hergestellt ist bzw. sind, die 5 bis 50 Gewichtsteile, bezogen auf 100 Gewichtsteile Kautschuk in der Mischung, thermisch schrumpfbarer Fasern in Form von Stapelfasern enthält bzw. enthalten, deren Länge 5 bis 50 mm, insbesondere 10 bis 30 mm, beträgt.

Es hat sich überraschenderweise herausgestellt, daß durch eine oder mehrere derartige Gummilagen die herkömmliche Nylonbandage auf technisch gleichwertige Art und Weise ersetzt werden kann. Von Bedeutung ist dabei, daß durch den hohen Anteil an Stapelfasern und durch den Einsatz von relativ langen Stapelfasern schon in der unvulkanisierten Mischung eine Art verfilztes Vlies von Stapelfasern entsteht, welches durch die Weiterverarbeitung die gewünschte Hauptorientierung in Umfangsrichtung des Reifens erhält. So ist es möglich, daß bei der Vulkanisation durch den dabei stattfindenden Heiß-Schrumpf der Fasern die gewünschten Spannungen aufgebaut werden.

Dabei hat es sich als besonders vorteilhaft herausgestellt, wenn der Anteil der Stapelfasern 30 bis 60 Gewichtsteile, bezogen auf 100 Gewichtsteile Kautschuk in der Rohmischung, beträgt.

Bei einer bevorzugten Ausführungsform der Erfindung werden Stapelfasern unterschiedlicher Längen verwendet. Diese Maßnahme unterstützt die Verarbeitbarkeit der unvulkanisierten Mischung.

Die Vliesbildung wird dadurch günstig beeinfllußt, wenn das Verhältnis Länge zu Breite der Stapelfasern mindestens 75 beträgt.

Als thermisch schrumpfbares Fasermaterial kommt ferner bevorzugt ein Polyamid, insbesondere Nylon 6 oder Nylon 6,6 oder ein Polyester, insbesondere ein Terephthalat, in Frage.

Im Sinne der Vermeidung von Produktionsabfällen ist es ferner günstig, wenn als Stapelfasern zerhackte bzw. zerschnittene, ungummierte oder gummierte, jedoch unvulkanisierte Schneidabfälle eingesetzt werden.

Zur Gewährleistung der Haftung der Stapelfasern in der fertigen Gummimischung ist es von Vorteil, wenn die Stapelfasern in Tauchlösungen bekannter Art vorbehandelt werden. Alternativ dazu kann die Rohmischung für die Gummilage Zusatzstoffung zur Förderung der Gummi-Textilhaftung enthalten, insbesondere phenolische Zusatzstoffe, wie beispielsweise Resorcin oder resorcinhaltige Harze sowie Methylendonatoren wie beispieslweise Hexamethylentetramin oder Hexamethylolmelamin.

Die Orientierung der Stapelfasern in der Mischung erfolgt verfahrenstechnisch auf einfache Weise, indem diese Orientierung durch Kalandrieren oder durch Extrusion der Staplefaser-Mischung erfolgt.

Im nächsten verfahrenstechnischen Schritt können die durch Extrusion oder Kalandrieren hergestellten Profile mit dem Laufstreifenprofil vordoubliert werden. Eine weitere, einfache Weiterverarbeitung der durch Extrusion bzw. Kalandrieren hergestellten Profile besteht darin, daß diese Profile undoubliert einfach oder mehrfach auf die Gürtelkonstruktion gewickelt werden.

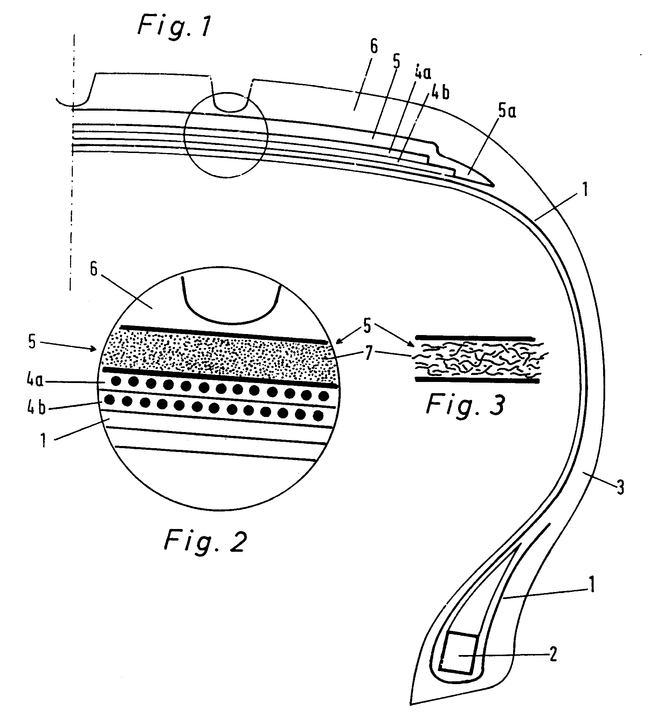

Weitere Merkmale, Vorteile und Einzelheiten der Erfindung werden nun anhand der Zeichnung, die ein Ausführungsbeispiel darstellt, näher beschrieben. Dabei zeigt Fig. 1 einen Teilquerschnitt durch einen Gürtelreifen in Radialbauart, Fig. 2 ein vergrößertes Detail aus Fig. 1 und Fig. 3 einen Teilquerschnitt durch eine nach der Erfindung gestaltete Gummilage.

Der in Fig. 1 dargestellte Reifen weist eine Radialkarkasse 1 auf, die in herkömmlicher Art und Weise durch Umschlingen von Wulstkernen 2 in Wulstbereichen verankert ist, sowie Seitenwände 3 und einen Laufstreifen 6, der mit einem Laufstreifenprofil versehen ist. Zwischen dem Laufstreifen 6 und der Karkasse 1 ist ein in diesem Ausführungsbeispiel zweilagiger Gürtel 4 angeordnet, wobei die Gürtellagen 4a, 4b aus in eine Gummischicht eingebetteten Festigkeitsträgern, beispielsweise aus Stahlkord, bestehen, die innerhalb einer Lage parallel zueinander verlaufen. Mit der Mittelumfangsebene des Reifens schließen die Korde in diesen beiden Lagen einen Winkel, der insbesondere zwischen 15 und 25 Grad beträgt, ein, wobei die Korde dieser beiden Lagen einander kreuzen.

Wie aus Fig. 1 in Verbindung mit Fig. 2 ersichtlich ist, ist zwischen dem Laufstreifen 6 und der radial äußersten Gürtellage 4a eine Gummilage 5 angeordnet. Die Gummilage 5 besteht aus einer Kautschukmischung, in der zwischen 5 und 50 Gewichtsteile, insbesondere zwischen 10 und 35 Gewichtsteile, bezogen auf 100 Gewichtsteile Kautschuk in der Lage 5, thermisch schrumpfbarer Fasern in Form von Stapelfasern, die im wesentlichen gleichmäßig in der Lage 5 verteilt sind, enthält. Wie insbesondere aus Fig. 2 und Fig. 3 ersichtlich ist, sind die Stapelfasern 7 im wesentlichen in Reifenumfangsrichtung orientiert.

Als thermisch schrumpfbares Fasermaterial kommen beispielsweise ein Polyamid, wie Nylon 6 oder Nylon 6,6, oder Polyester, insbesondere ein Terephthalat, in Frage. Dabei können zerhackte bzw. zerschnittene Fasern bzw. Filamente, ungummierte oder gummierte, jedoch unvulkanisierte, bei der Reifenfertigung anfallende Schneidabfälle verwendet werden. Die Länge der Stapelfasern 7 sollte zwischen 5 und 50 mm, insbesondere zwischen 10 bis 30 mm betragen, wobei Stapelfasern 7 unterschiedlicher Längen eingesetzt werden können. Als besonders günstig hat es sich herausgestellt, wenn das Verhältnis Länge zu Breite der Stapelfasern mehr als 75 beträgt. Die Dicke der Gummilage 5 wird mit der gewählten Faserkonzentration abgestimmt. In einer dünnen Lage von 0,5 bis zu ca. 1,5 mm Dicke werden höhere Faseranteile eingebracht, in einer dicken Lage bis zu ca. 3,5 mm sind mit relativ niedrigen Faseranteilen gute Ergebnisse erzielbar.

Durch die Verwendung von relativ langen Stapelfasern mit einem hohen Verhältnis Länge zu Breite entsteht in der unvulkanisierten Kautschukmischung, die in eine entsprechende Plattenform zur Verwendung als Gummilage 5 gebracht wird, ein verfilztes Vlies von Stapelfasern, welches bei der Vulkanisation des Reifens schrumpft und die gewünschten Spannungen liefert.

Wie Fig. 1 zeigt wird der seitliche Auslauf 5a der Gummilage 5 vorzugsweise verlaufend gestaltet, so daß die Kanten der Gürtellagen 4a, 4b abgedeckt werden. Dadurch werden hohe Modulsprünge vermieden. Die Geometrie des Auslaufes 5a kann abweichend von der dargestellten Form gewährt werden. Auch die sonstige Lagengeometrie der Gummilage 5 kann abweichend von der dargestellten sein, so kann insbesondere, im Querschnitt betrachtet, eine Profilierung derart erfolgen, daß im Abdeckbereich der Gürtellagen 4a, 4b eine höhere Lagendicke gewählt wird. Es ist ferner möglich, die Gummilage 5 derart zu gestalten, daß in dem die Gürtelkanten abdeckenden Bereich eine höhere Stapelfaserkonzentration vorliegt als im sonstigen Gummilagenbereich. Herstellungstechnisch läßt sich diese Maßnahme beispielsweise dadurch verwirklichen, daß gesonderte Randstreifen verwendet werden.

Die Kautschukmischung selbst basiert auf Polymeren bzw. Polymerverschnitten, wie sie für Gürtelabdeckmischungen üblich sind, und enthält die üblichen Zusatzstoffe. Im folgenden ist ein Beispiel einer Kautschukmischung für die Gummilage 5 angegeben, mit der sehr gute Ergebnisse im Reifen erzielt wurden:

| | Gewichtsteile |
|---|---|
| Naturkautschuk SMR 10 | 85 |
| Cis-1,4-Polybutadien | 15 |
| Ruß N326 | 55 |
| Kieselsäure gefüllt | 10 |
| Mineralöl aromatisch | 8 |
| Alterungsschutzmittel | 2 |
| Zinkoxid | 6 |
| Stearinsäure | 1,2 |
| Resorcin | 2,5 |
| Hexamethylolmelaminhexamethyläther | 2,5 |
| Schwefel unlöslich | 6 |
| Benzothiazyl-2-dicyclohexylsulfenamid (DCBS) | 1,8 |
| Nylon-Aufpressung 10 mm Faserlänge* | 45 |

| | |
|---|---|
| *Verwendet wurde unvulkanisierter Schneidabfall einer Nylonbandage mit 30 Gewichtsprozent Nylon der Konstruktion 940/2. Der Schneidabfall wurde auf 10 mm Faserlänge zerhackt und anschließend auf einem Walzwerk homogenisiert. Die Aufpreßmischung im Schneidabfall ist rezeptmäßig gleich der obigen Rezeptur, enthält aber naturgemäß keinen gehackten Schneidabfall. | |

Die Stapelfasern können zur Verbesserung der Haftung in der Gummimischung in bekannter Weise in einer Tauchlösung vorbehandelt werden. Andererseits kann jedoch auch die Kautschukmischung für die Gummilage 5 mit entsprechenden Zusatzstoffen zur Förderung der Kautschuk-Stapelfaser-Haftung versehen werden. Dabei kommen insbesondere phenolische Zusatzstoffe, wie Resorcin oder resorcinhaltige Harze in Frage, ferner auch Methylendonatoren, vor allem Hexamethylentetramin oder Hexamethyl-Methylol-Melamin.

Die gewünschte Orientierung der Stapelfasern 7 kann durch Extrudieren der die Stapelfasern 7 enthaltenen Kautschukmischung oder durch Kalandrieren erhalten werden.

Die Weiterverarbeitung kann nun so erfolgen, daß entweder die durch Extrudieren oder Kalandrieren entstandenen Profile bzw. Platten mit dem Laufstreifenprofil vordoubliert werden oder diese Profile oder Platten undoubliert einfach oder mehrfach über die Gürtelkonstruktion gewickelt werden.

Ferner ist es möglich, die Stapelfasermischung durch Extrudieren oder Kalandrieren in schmale streifenförmige Profile zu formen und diese in einem Wickelvorgang auf die Gürtelkonstruktion aufzubringen. Dieses Verfahren ist insbesondere bei einer dünnen Auslegung der Gummilage 5 günstig.

Es ist selbstverständlich, daß das Einmischen der Stapelfasern 7 als auch deren Weiterverarbeitung stets unterhalb einer Temperatur erfolgt, bei der kein vorzeitiges Schrumpfen der Stapelfasern 7 stattfindet. Erst bei der Vulkanisation des Reifens soll die für die Schrumpfung der Stapelfasern 7 erforderliche Temperatur erreicht werden, da nur so sichergestellt ist, daß im fertigen Reifen die gewünschten Spannungen aufgebaut werden.

Die Gürtelabdecklage 5 kann nun, wie Fig. 1 zeigt, den Gürtel 4 inklusive dessen axial äußeren Kanten komplett abdecken. Es ist jedoch auch möglich, anstelle der komplett abdeckenden Lage 2 Streifen vorzusehen, die jeweils den Bereich der freien Gürtelkanten abdecken.

## Patentansprüche

1. Fahrzeugreifen mit einer ein- oder mehrlagigen Radialkarkasse, einem Laufstreifen und einem zwischen der Radialkarkasse (1) und dem Laufstreifen angeordneten Gürtel mit insbesondere mindestens 2 Gürtellagen (4a,4b) mit in jeder Lage parallel zueinander verlaufenden Festigkeitsträgern aus Stahl oder aus einem textilen Material und mit zumindest einer zwischen dem Laufstreifen und dem Gürtel angeordneten Gummilage (5), die mit Fasern verstärkt ist, deren Hauptorientierungsrichtung mit der Umfangsrichtung übereinstimmt, dadurch gekennzeichnet, daß die Gummilage bzw. die Gummilagen (5) aus einer Kautschukmischung hergestellt ist bzw. sind, die 5 bis 50 Gewichtsteile, bezogen auf 100 Gewichtsteile Kautschuk in der Mischung, thermisch schrumpfbarer Fasern in Form von Stapelfasern (7) enthält bzw. enthalten, deren Länge 5 bis 50 mm, insbesondere 10 bis 30 mm, beträgt.

2. Fahrzeugreifen nach Anspruch 1, dadurch gekennzeichnet, daß der Anteil der Stapelfasern 10 bis 35 Gewichtsteile, bezogen auf 100 Gewichtsteile Kautschuk in der Rohmischung, beträgt.

3. Fahrzeugreifen nach Anspruch 1 oder Anspruch 2, dadurch gekennzeichnet, daß die Gummilage(n) (5) Stapelfasern (7) unterschiedlicher Längen enthält bzw. enthalten.

4. Fahrzeugreifen nach einem der Ansprüche 1 bis 3, dadurch gekennzeichnet, daß das Verhältnis Länge zu Breite der Stapelfasern mindestens 75 beträgt.

5. Fahrzeugreifen nach einem der Ansprüche 1 bis 4, dadurch gekennzeichnet, daß das thermisch schrumpfbare Fasermaterial ein Polyamid, insbesondere Nylon 6 oder Nylon 6,6 ist.

6. Fahrzeugreifennach einem der Ansprüche 1 bis 4, dadurch gekennzeichnet, daß das thermisch schrumpfbare Fasermaterial ein Polyester, insbesondere ein Terephthalat, ist.

7. Fahrzeugreifen nach einem der Ansprüche 1 bis 6, dadurch gekennzeichnet, daß die Stapelfasern (7) zerhackte bzw. zerschnittene, ungummierte oder gummierte, jedoch unvulkanisierte Schneidabfälle sind.

8. Fahrzeugreifen nach einem der Ansprüche 1 bis 7, dadurch gekennzeichnet, daß die Dicke der Gummilage (5) zwischen 0,5 bis 3,5 mm, insbesondere zwischen 1 bis 3 mm, beträgt.

9. Fahrzeugreifen nach einem der Ansprüche 1 bis 8, dadurch gekennzeichnet, daß die Gummilage (5) die seitlichen Kantenbereiche des Gürtels (4) abdeckt, wobei vorzugsweise der Stapelfaseranteil in diesen Bereichen höher ist als im sonstigen Gummilagenbereich.

10. Fahrzeugreifen nach einem der Ansprüche 1 bis 7, dadurch gekennzeichnet, daß die Stapelfasern (7) in Tauchlösungen bekannter Art vorbehandelt sind.

11. Fahrzeugreifen nach einem der Ansprüche 1 bis 7, dadurch gekennzeichnet, daß der Rohmischung für die Gummilage (5) Zusatzstoffung zur Förderung der Gummi-Textilhaftung beigemengt sind, insbesondere phenolische Zusatzstoffe, wie beispielsweise Resorcin oder resorcinhaltige Harze sowie Methylendonatoren wie beispielsweise Hexamethylentetramin oder Hexamethylolmelamin.

## Claims

1. Vehicle tyre, having a single-ply or multiple-ply radial carcase, a tread strip and a belt, which is disposed between the radial carcase (1) and the tread strip and is provided with, more especially, at least 2 belt plies (4a, 4b), having reinforcing members formed from steel or a textile material and extending parallel to one another in each position, and having at least one rubber ply (5) disposed between the tread strip and the belt, said rubber ply being reinforced with fibres, the main direction of orientation of which fibres is identical to the circumferential direction, characterised in that the rubber ply or respectively the rubber plies (5) is or are produced from a rubber mixture and contains or contain 5 to 50 parts by weight, relative to 100 parts by weight rubber in the mixture, heat-shrinkable fibres in the form of staple fibres (7), the length of which fibres is 5 to 50 mm, more especially 10 to 30 mm.

2. Vehicle tyre according to claim 1, characterised in that the proportion of staple fibres is 10 to 35 parts by weight, relative to 100 parts by weight rubber in the crude mixture.

3. Vehicle tyre according to claim 1 or claim 2, characterised in that the rubber ply (plies) (5) contains (contain) staple fibres (7) of variable lengths.

4. Vehicle tyre according to one of claims 1 to 3, characterised in that the ratio of length to width of the staple fibres is at least 75.

5. Vehicle tyre according to one of claims 1 to 4, characterised in that the heat-shrinkable fibrous material is a polyamide, more especially Nylon 6 or Nylon 6.6.

6. Vehicle tyre according to one of claims 1 to 4, characterised in that the heat-shrinkable fibrous material is a polyester, more especially a terephthalate.

7. Vehicle tyre according to one of claims 1 to 6, characterised in that the staple fibres (7) are chopped or cut-up, non-rubberised or rubberised, but non-vulcanised cut waste materials.

8. Vehicle tyre according to one of claims 1 to 7, characterised in that the thickness of the rubber ply (5) is between 0.5 mm and 3.5 mm, more especially between 1 mm and 3 mm.

9. Vehicle tyre according to one of claims 1 to 8, characterised in that the rubber ply (5) covers the lateral edge regions of the belt (4), the proportion of staple fibre preferably being higher in these regions than in the other rubber ply region.

10. Vehicle tyre according to one of claims 1 to 7, characterised in that the staple fibres (7) are pretreated in immersion solutions of known type.

11. Vehicle tyre according to one of claims 1 to 7, characterised in that additional substances to promote the adhesion between rubber and textile are admixed to the crude mixture for the rubber ply (5), more especially phenolic additives, such as, for example, resorcinol or resorcinol-containing resins as well as methylene donors such as, for example, hexamethylene tetramine or hexamethylol melamine.

## Revendications

1. Bandage pneumatique pour véhicules, comprenant une carcasse radiale à une ou plusieurs couche(s) ; une bande de roulement ; une ceinture interposée entre la carcasse radiale (1) et la bande de roulement et munie, notamment, d'au moins deux couches (4a, 4b) avec des supports de résistance en acier ou en un matériau textile, s'étendant avec parallélisme mutuel dans chaque couche ; et au moins une couche de caoutchouc (5) intercalée entre la bande de roulement et la ceinture, et renforcée par des fibres dont la direction d'orientation principale coïncide avec la direction périphérique, caractérisé par le fait que la ou les couche(s) de caoutchouc (5) est (sont) fabriquée(s) en un mélange de caoutchouc renfermant, par rapport à 100 parts pondérales de caoutchouc dans le mélange, de 5 à 50 parts pondérales de fibres thermorétractibles se présentant comme des fibres de mèche (7) dont la longueur mesure de 5 à 50 mm, en particulier de 10 à 30 mm.

2. Bandage pneumatique pour véhicules, selon la revendication 1, caractérisé par le fait que la proportion des fibres de mèche représente de 10 à 35 parts pondérales par rapport à 100 parts pondérales de caoutchouc dans le mélange brut.

3. Bandage pneumatique pour véhicules, selon la revendication 1 ou la revendication 2, caractérisé par le fait que la (les) couche(s) de caoutchouc (5) renferme(nt) des fibres de mèche (7) de longueurs différentes.

4. Bandage pneumatique pour véhicules, selon l'une des revendications 1 à 3, caractérisé par le fait que le rapport entre la longueur et la largeur des fibres de mèche est d'au moins 75.

5. Bandage pneumatique pour véhicules, selon l'une des revendications 1 à 4, caractérisé par le fait que le matériau fibreux thermorétractible est un polyamide, en particulier du Nylon 6 ou du Nylon 6,6.

6. Bandage pneumatique pour véhicules, selon l'une des revendications 1 à 4, caractérisé par le fait que le matériau fibreux thermorétractible est un polyester, en particulier un téréphtalate.

7. Bandage pneumatique pour véhicules, selon l'une des revendications 1 à 6, caractérisé par le fait que les fibres de mèche (7) sont des déchets de coupe respectivement hachés ou sectionnés, non caoutchoutés ou caoutchoutés, mais cependant non vulcanisés.

8. Bandage pneumatique pour véhicules, selon l'une des revendications 1 à 7, caractérisé par le fait que l'épaisseur de la couche de caoutchouc (5) mesure entre 0,5 et 3,5 mm, notamment entre 1 et 3 mm.

9. Bandage pneumatique pour véhicules, selon l'une des revendications 1 à 8, caractérisé par le fait que la couche de caoutchouc (5) recouvre les régions marginales latérales de la ceinture (4), la proportion de fibres de mèche étant de préférence plus forte, dans ces régions, que dans la région restante de la couche de caoutchouc.

10. Bandage pneumatique pour véhicules, selon l'une des revendications 1 à 7, caractérisé par le fait que les fibres de mèche (7) sont soumises à un traitement préalable dans des solutions d'immersion d'un type connu.

11. Bandage pneumatique pour véhicules, selon l'une des revendications 1 à 7, caractérisé par le fait que des adjuvants sont ajoutés au mélange brut destiné à la couche de caoutchouc (5), pour favoriser l'adhérence caoutchouc-textile, en particulier des adjuvants phénoliques comme, par exemple, de la résorcine ou des résines à base de résorcine, ainsi que des donneurs de méthylène comme, par exemple, de l'hexaméthylène-tétramine ou de l'hexaméthylol-mélamine.
